# EUROPÄISCHE PATENTANMELDUNG

(11) **EP 4 023 486 A1**
(43) Veröffentlichungstag der Anmeldung: **06.07.2022**
(21) Anmeldenummer: 21203503.4
(22) Anmeldetag: 19.10.2021
(51) Int. Cl.: B60L 53/62, B60L 53/63

(54) **LASTMANAGEMENTTECHNIK FÜR LADESTATIONEN FÜR ELEKTROFAHRZEUGE**

(30) Priorität: 05.01.2021 DE 102021100047
(71) Anmelder: Innogy eMobility Solutions GmbH, 44139 Dortmund (DE)
(72) Erfinder: Diekert, Jens, 45257 Essen (DE); Kledewski, Ingo, 44319 Dortmund (DE)
(74) Vertreter: Gottschald, Jan

(57) **Zusammenfassung**

Es wird ein Lastmanagementverfahren und eine Lastmanagementvorrichtung (40) für an einem Netzanschlusspunkt (5) angeschlossene Ladestationen (10, 20, 30) für Elektrofahrzeuge (21, 31) beschrieben. Das Verfahren umfasst die Verfahrensschritte Erlangen einer aktuellen Anzahl von Ladestationen (10, 20, 30), an denen Elektrofahrzeuge (21, 23) elektrisch geladen werden, Bestimmen, in Abhängigkeit von der Anzahl von Ladestationen (10, 20, 30), einer an dem Netzanschlusspunkt (5) maximal abgebbaren elektrischen Leistung, und Steuern elektrischer Ladeleistungen der Ladestationen (10, 20, 30), an denen die Elektrofahrzeuge (21, 31) geladen werden, in Abhängigkeit von der an dem Netzanschlusspunkt (5) maximal abgebbaren elektrischen Leistung.

## Beschreibung

### TECHNISCHES GEBIET

Die vorliegende Offenbarung betrifft eine Lastmanagementtechnik für Ladestationen für Elektrofahrzeuge. Insbesondere betrifft die vorliegende Offenbarung ein Lastmanagementverfahren für an einem Netzanschlusspunkt angeschlossene Ladestationen für Elektrofahrzeuge, eine Lastmanagementvorrichtung für an einem Netzanschlusspunkt angeschlossene Ladestationen für Elektrofahrzeuge, eine Ladestation für Elektrofahrzeuge, einen Server, ein Computerprogrammprodukt und ein computerlesbares Speichermedium.

### HINTERGRUND

Mit dem Mobilitätswechsel hin zur Elektromobilität werden viele neue Ladestationen für Elektrofahrzeuge benötigt. Um die elektrischen Energienetze nicht zu überlasten bzw. die durch neue Ladestationen verursachte Notwendigkeit zum Ausbau der elektrischen Energienetze zu reduzieren werden Lastmanagementsysteme für Ladestationen eingesetzt, welche Lastmanagement-Algorithmen zum Optimieren der Auslastung der Ladestationen ausführen.

Ziel der Lastmanagement-Algorithmen ist es, den an den Ladestationen angeschlossenen Elektrofahrzeugen die maximal zur Verfügung stehende elektrische Leistung zum Laden zur Verfügung zu stellen. Dazu lösen die Lastmanagement-Algorithmen komplexe Optimierungsprobleme. Die maximal zur Verfügung stehende Leistung ist in der Regel durch einen Netzanschlusspunkt, welcher eine Anknüpfung an ein elektrisches Energieversorgungsnetz darstellt, bestimmt. Dabei darf die an dem Netzanschlusspunkt maximal zur Verfügung stehende elektrische Leistung zu keinem Zeitpunkt überschritten werden. Dies stellt eine zwingende Bedingung für die Lastmanagement-Algorithmen dar.

Bei der IEC61851-1:2017 handelt es sich um eine internationale Norm zum Laden von Elektrofahrzeugen. Diese Norm erlaubt zum einen, dass ein an eine Ladestation angeschlossenes Elektrofahrzeug mehr Strom beziehen kann, als ihm durch die Ladestation gestattet wird. Beispielsweise ist in der Norm keine Reaktion der Ladestation definiert, wenn das Elektrofahrzeug 10% mehr Strom bezieht als die Ladestation erlaubt. Zum anderen ist in dieser Norm eine Latenzzeit definiert, während der ein Elektrofahrzeug auf eine Ladestromvorgabe durch die Ladestation reagieren muss.

Entsprechend dieser Norm gibt es daher Ladestationen mit unterschiedlichen Überstromschutzmechanismen. Eine auf dem Markt erhältliche Ladestation gestattet beispielsweise einem angeschlossenen Elektrofahrzeug für 1000 Sekunden 105% des erlaubten Ladestroms zu beziehen, was 5% Überstrom entspricht.

Lastmanagement-Algorithmen berücksichtigen solche Überstromsituationen. Um jedoch zu verhindern, dass beim Ausnutzen solcher Überstromsituationen die an dem Netzanschlusspunkt maximal zur Verfügung stehende elektrische Leistung überschritten wird, berücksichtigen Lastmanagement-Algorithmen ferner ihm Rahmen eines Puffers einen Pufferleistungswert.

Es ist bekannt, den Puffer bei der Konfiguration des Lastmanagement-Algorithmus (bzw. des Lastmanagementsystems) statisch festzulegen, sodass die Größe des Puffers während des Betriebs des Lastmanagementsystems nicht verändert werden kann. Dies hat jedoch den Nachteil, dass die Auslastung des Netzanschlusspunkts in einer Vielzahl von Betriebssituationen nicht optimal ist und kann dazu führen, dass verfügbare elektrische Leistung nicht genutzt wird.

Die WO 2015/143250 A1 beschreibt ein Lastmanagementsystem mit einem dynamischen Puffer, wobei keine Angaben gemacht werden, auf Basis welcher Vorgaben die Größe des Puffers festgelegt werden kann.

Die US 10,065,519 B1 beschreibt ein Lastmanagementsystem mit einer Vielzahl von Ladestationen, wobei jede Ladestation einen Puffer umfasst, der dynamisch hinsichtlich der Laufzeit angepasst werden kann. Die Größe des Puffers kann über eine Datenkommunikationsverbindung vorgegeben werden. Für die Bestimmung der Größe des Puffers berücksichtigt das Lastmanagementsystem jedoch nur die jeweilige Ladestation betreffende Vorgaben. Dies hat den Nachteil, dass stets ein Anteil der tatsächlich vorhandenen, maximal zur Verfügung stehenden Leistung von den Ladestationen nicht genutzt wird.

### KURZER ABRISS

Der vorliegenden Offenbarung liegt die Aufgabe zugrunde, eine optimierte Lastmanagementtechnik für an einem Netzanschlusspunkt angeschlossene Ladestationen für Elektrofahrzeuge bereitzustellen.

Zur Lösung dieses Problems wird ein Lastmanagementverfahren für an einem Netzanschlusspunkt angeschlossene Ladestationen für Elektrofahrzeuge vorgeschlagen, welches die Schritte Erlangen einer aktuellen Anzahl von Ladestationen, an denen Elektrofahrzeuge elektrisch geladen werden, Bestimmen, in Abhängigkeit von der Anzahl von Ladestationen, einer an dem Netzanschlusspunkt maximal abgebbaren elektrischen Leistung, und Steuern elektrischer Ladeleistungen der Ladestationen, an denen die Elektrofahrzeuge geladen werden, in Abhängigkeit von der an dem Netzanschlusspunkt maximal abgebbaren elektrischen Leistung, umfasst.

In dem die an dem Netzanschlusspunkt maximal abgebbare elektrische Leistung direkt von der Anzahl von Elektrofahrzeugen, die aktuell an den Ladestationen geladen werden, abhängt, kann die an dem Netzanschlusspunkt maximal abgebbare elektrische Leistung optimal auf die aktiven Ladestation verteilt werden. Dabei kann verhindert werden, dass die an dem Netzanschlusspunkt maximal zur Verfügung stehende elektrische Leistung überschritten wird.

Bei dem Netzanschlusspunkt kann es sich beispielsweise um eine Transformatorstation handeln, die einen Übergang vom Mittelspannungsnetz ins Niederspannungsnetz bereitstellt, und an die eine Vielzahl von Ladestationen angeschlossen ist. Neben der Vielzahl von Ladestationen können weitere elektrische Verbraucher, wie beispielsweise Haushalte, an den Netzanschlusspunkt angeschlossen sein. Bei den Ladestationen kann es sich um jede Art von Ladestation handeln, die ein Laden von Elektrofahrzeugen mit elektrische Energie ermöglicht, wie beispielsweise eine Gleichstromladestation oder eine Wechselstromladestation.

So kann die an dem Netzanschlusspunkt maximal abgebbare elektrische Leistung aus einer Differenz einer tatsächlich vorhandenen, an dem Netzanschlusspunkt maximal abgebbaren elektrischen Leistung und einem Leistungspufferwert bestimmt werden. Bei dem Leistungspufferwert kann es sich beispielsweise um einen dynamisch veränderbaren Wert in der Einheit kWh handeln.

Vorzugsweise hängt die Höhe des Leistungspufferwerts von der Anzahl von Ladestationen, an denen aktuell Elektrofahrzeuge elektrisch geladen werden, ab.

Insbesondere kann sich der Leistungspufferwert erhöhen, je mehr Ladestationen aktuell Elektrofahrzeuge elektrisch laden. Ferner ist es möglich, dass sich der Leistungspufferwert verringert, je weniger Ladestationen aktuell Elektrofahrzeuge elektrisch laden.

So kann der Leistungspufferwert dynamisch zur Laufzeit bestimmt werden, wobei die Größe des dynamischen Puffers direkt davon abhängig ist, wie viele Elektrofahrzeuge aktuell an den Ladestationen elektrische Energie bzw. Leistung beziehen, d.h. wie viele Ladevorgänge aktuell durchgeführt werden. Je mehr Elektrofahrzeuge geladen werden, desto höher ist die Wahrscheinlichkeit, dass eine Überstromsituation an dem Netzanschlusspunkt auftritt. In einem solchen Fall wird die Größe des Puffers erhöht. Wenn jedoch eine relativ geringe Anzahl von Elektrofahrzeugen aktuell an den Ladestationen geladen wird, ist die Wahrscheinlichkeit geringer, dass eine Überstromsituation an dem Netzanschlusspunkt auftritt. In diesem Fall wird die Größe des Puffers reduziert.

Um das Lastmanagementverfahren weiter zu optimieren, kann sich ab einer vorgegebenen aktuellen Anzahl von Ladestationen, die Elektrofahrzeuge elektrisch laden, bei einer Erhöhung der aktuellen Anzahl von Ladestationen, an denen die Elektrofahrzeuge elektrisch geladen werden, der Leistungspufferwert nicht erhöhen. So verändert sich ab einer bestimmten Anzahl von ladenden Elektrofahrzeugen der Leistungspufferwert nicht mehr. Diesem Aspekt liegt die Erkenntnis zugrunde, dass die Wahrscheinlichkeit abnimmt, dass sich alle ladenden Elektrofahrzeuge ähnlich verhalten, je mehr Elektrofahrzeuge aktuell elektrisch geladen werden.

Gemäß einer Ausführungsform kann vorgesehen sein, dass für jede elektrische Phase des Netzanschlusspunkts die an dem Netzanschlusspunkt maximal abgebbare elektrische Leistung bestimmt wird. So kann für jede elektrische Phase einer Lastmanagementvorrichtung ein individueller, dynamischer Puffer vorgesehen sein. Dies liefert insbesondere dann Vorteile, wenn die elektrischen Phasen unsymmetrisch belastet werden. So kann es beispielsweise beim Laden eines Elektrofahrzeugs zu asymmetrischen Belastungen in den Phasen L1 und L2 kommen, wobei die dynamischen Puffer der Phasen L1, L2 bzw. L3 die asymmetrischen Lasten ausgleichen.

Für eine weitere Optimierung der Auslastung der Ladestationen kann das Verfahren ferner die Schritte Bestimmen von Batterieladezuständen der Elektrofahrzeuge, die aktuell an den Ladestationen elektrisch geladen werden, und Bestimmen, in Abhängigkeit von den Batterieladezuständen der Elektrofahrzeuge, der an dem Netzanschlusspunkt maximal abgebbaren elektrischen Leistung, umfassen.

Bei dieser Ausführungsform wird berücksichtigt, dass die Leistungsaufnahme eines Elektrofahrzeugs während eines Ladevorgangs abnimmt, wenn die Batterie des Elektrofahrzeugs fast vollständig geladen ist. So kann das Lastmanagementverfahren eine solche Reduzierung der Ladeleistung eines bzw. aller Elektrofahrzeuge bestimmen. Anschließend kann die Größe des Leistungspufferwerts in Abhängigkeit von der reduzierten Ladeleistung dynamisch angepasst werden. Dabei kann das Lastmanagementverfahren für die Bestimmung des dynamischen Leistungspufferwerts berücksichtigen, wie viele Elektrofahrzeuge weniger elektrische Leistung von den Ladestationen beziehen, da deren Batterien fast vollständig aufgeladen sind. Gemäß dieser Ausführungsform kann somit mehr tatsächlich zur Verfügung stehende Leistung an den aktiven Ladestationen bereitgestellt werden.

Insbesondere kann das Bestimmen der Batterieladezustände den Verfahrensschritt Vergleichen aktueller Leistungsaufnahmewerte der Elektrofahrzeuge mit zeitlich früheren Leistungsaufnahmewerten der Elektrofahrzeuge umfassen. Dieser Vergleich kann kontinuierlich, insbesondere kontinuierlich in vorgegebenen Zeitabschnitten erfolgen. Andere Verfahren zur Bestimmung der Batterieladezustände, wie beispielsweise Messungen, sind ebenfalls dankbar.

So kann die an dem Netzanschlusspunkt maximal abgebbare elektrische Leistung erhöht werden, d.h. der dynamische Puffer verringert werden, wenn der Batterieladezustand zumindest eines ladenden Elektrofahrzeugs 80% einer Vollaufladung erreicht hat. Alternativ kann die an dem Netzanschlusspunkt maximal abgebbare elektrische Leistung erhöht werden, wenn der Batterieladezustand zumindest eines ladenden Elektrofahrzeugs 90% einer Vollaufladung erreicht hat. Entsprechend können die Ladezustände mehrerer oder aller ladender Elektrofahrzeuge berücksichtigt werden.

Um das Lastmanagementverfahren noch besser an die aktuellen Ladezustände der Ladestationen anpassen zu können, können bei dem Verfahren ferner die Schritte des Bestimmens der aktuellen Anzahl von Ladestationen, an denen Elektrofahrzeuge elektrisch geladen werden, des Bestimmens der an dem Netzanschlusspunkt maximal abgebbaren elektrischen Leistung, und/oder des Steuerns der elektrischen Ladeleistungen der Ladestationen kontinuierlich in vorbestimmten zeitlichen Abständen erfolgen. Insbesondere können sämtliche Verfahrensschritte kontinuierlich, beispielsweise einmal pro Minute, erfolgen. Es ist auch denkbar, dass einige oder alle Verfahrensschritte des Lastmanagementverfahrens in Echtzeit ausgeführt werden.

Gemäß einer Ausführungsform verteilt das Steuern der elektrischen Ladeleistungen der Ladestationen die an dem Netzanschlusspunkt maximal abgebbare elektrische Leistung gleichmäßig auf alle Ladestationen, an denen aktuell Elektrofahrzeuge elektrisch geladen werden. Dadurch wird es ermöglicht, dass jedes Elektrofahrzeug gleich schnell geladen werden kann. Andere Verteilungen, wie beispielsweise "First Come, First Serve" sind auch denkbar.

Ferner kann das Steuern der elektrischen Ladeleistungen der Ladestationen den Verfahrensschritt Vorgeben von Soll-Ladeparametern für die Ladestationen, an denen aktuell Elektrofahrzeuge elektrisch geladen werden, umfassen.

Die vorliegende Offenbarung betrifft auch ein Computerprogrammprodukt, umfassend Befehle, die bei der Ausführung des Programms durch einen Computer diesen veranlassen, eines der vorstehend beschriebenen Lastmanagementverfahren auszuführen. Bei dem Computer kann es sich beispielsweise um eine Recheneinheit handeln, die in einer Ladestation, einer Transformatorstation oder einem Server integriert ist, und mit den (weiteren) Ladestationen in Kommunikationsverbindung steht.

Die vorliegende Offenbarung betrifft des Weiteren ein computerlesbares Speichermedium, umfassend Befehle, die bei der Ausführung durch einen Computer diesen veranlassen, eines der vorstehend beschriebenen Lastmanagementverfahren auszuführen. Bei dem Speichermedium kann es sich beispielsweise um einen Cloud-Speicher oder einen tragbaren Schreib-Lesespeicher handeln.

Zur Lösung des eingangs genannten Problems wird ferner eine Lastmanagementvorrichtung für an einem Netzanschlusspunkt angeschlossene Ladestationen für Elektrofahrzeuge vorgeschlagen, umfassend Mittel zum Erlangen einer aktuellen Anzahl von Ladestationen, an denen Elektrofahrzeuge elektrisch geladen werden, Mittel zum Bestimmen, in Abhängigkeit von der Anzahl von Ladestationen, einer an dem Netzanschlusspunkt maximal abgebbaren elektrischen Leistung, und Mittel zum Steuern elektrischer Ladeleistungen der Ladestationen, an denen die Elektrofahrzeuge geladen werden, in Abhängigkeit von der an dem Netzanschlusspunkt maximal abgebbaren elektrischen Leistung. Die Mittel zum Erlangen einer aktuellen Anzahl von Ladestationen, Mittel zum Bestimmen einer an dem Netzanschlusspunkt maximal abgebbaren elektrischen Leistung und Mittel zum Steuern elektrischer Ladeleistungen der Ladestationen können mit Hilfe einer Recheneinheit und einer damit verbundenen Kommunikationsvorrichtung, die mit den Ladestationen in Kommunikationsverbindung steht, realisiert werden. Bei der Lastmanagementvorrichtung kann sich insbesondere um eine Recheneinheit handeln, die in einer Ladestation, einer Transformatorstation oder einem Server integriert ist, und mit den Ladestationen in Kommunikationsverbindung steht.

Die vorliegende Offenbarung betrifft des Weiteren eine Ladestation für Elektrofahrzeuge, die eine vorstehend beschriebene Lastmanagementvorrichtung und eine Kommunikationsvorrichtung umfasst, die dazu eingerichtet ist, mit den weiteren an dem Netzanschlusspunkt angeschlossenen Ladestationen für Elektrofahrzeuge zu kommunizieren.

Ferner betrifft die vorliegende Offenbarung einen Server, der eine vorstehend beschriebene Lastmanagementvorrichtung und eine Kommunikationsvorrichtung umfasst, die dazu eingerichtet ist, mit den an dem Netzanschlusspunkt angeschlossenen Ladestationen für Elektrofahrzeuge zu kommunizieren. Bei dem Server kann es sich beispielsweise um einen Cloud-Server handeln.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist folglich nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren, Vorrichtungen und Systeme ergeben sich aus der nachfolgenden Beschreibung von Ausführungsbeispielen und den Figuren.
- Fig. 1: zeigt eine schematische Darstellung eines ersten Ausführungsbeispiels eines Lastmanagementsystems für eine Vielzahl an einem Netzanschlusspunkt angeschlossene Ladestationen für Elektrofahrzeuge;
- Fig. 2: zeigt eine schematische Darstellung eines Ausführungsbeispiels einer Lastma nagementvorrichtung;
- Fig. 3: zeigt ein Flussdiagramm eines Ausführungsbeispiels eines Lastmanagementverfahrens;
- Fig. 4: zeigt ein Diagramm, welches elektrische Pufferleistungswerte in Abhängigkeit von der Anzahl von aktuell ladenden Elektrofahrzeugen veranschaulicht; und
- Fig. 5: zeigt eine schematische Darstellung eines zweiten Ausführungsbeispiels eines Lastmanagementsystems für eine Vielzahl an einem Netzanschlusspunkt angeschlossene Ladestationen für Elektrofahrzeuge.

### DETAILLIERTE BESCHREIBUNG

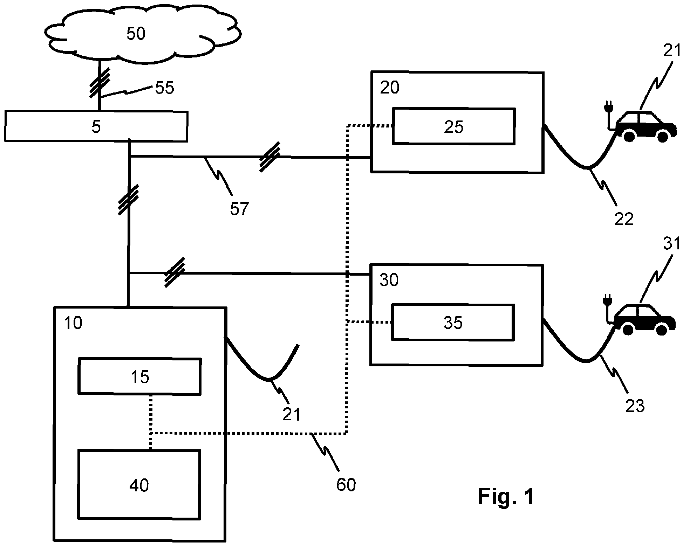

Die Fig. 1 zeigt eine schematische Darstellung eines ersten Ausführungsbeispiels eines Lastmanagementsystems für eine Vielzahl an einem Netzanschlusspunkt angeschlossene Ladestationen für Elektrofahrzeuge.

Ein Netzanschlusspunkt 5 ist über eine dreiphasige Leitung 55 mit einem elektrischen Energienetz 50 verbunden. Beispielsweise handelt es sich bei dem Netzanschlusspunkt 5 um eine Transformatorstation, welche einen Übergang von einem Mittelspannungsnetz 50 in ein Niederspannungsnetz bereitstellt.

Über jeweilige dreiphasige Leitungen 57 sind an dem Netzanschlusspunkt 5 eine erste Ladestation 10, eine zweite Ladestation 20 und eine dritte Ladestation 30 angeschlossen. Neben den bekannten Elementen von Ladestationen für Elektrofahrzeuge umfasst die erste Ladestation 10 eine erste Ladestationssoftware 15, die zweite Ladestation 20 eine zweite Ladestationssoftware 25 und die dritte Ladestation 30 eine dritte Ladestationssoftware 35. Die erste Ladestationssoftware 15, die zweite Ladestationssoftware 25 und die dritte Ladestationssoftware 35 laufen auf jeweiligen Recheneinheiten (in Fig. 1 nicht gezeigt) und steuern die Ladevorgänge der Elektrofahrzeuge 21, 31.

Des Weiteren umfasst die erste Ladestation 10 ein erstes Ladekabel 21, die zweite Ladestation 20 ein zweites Ladekabel 22 und die dritte Ladestation 30 ein drittes Ladekabel 23. Über das zweite Ladekabel 22 wird ein erstes Elektrofahrzeug 21 von der zweiten Ladestation 20 mit elektrischer Energie geladen und über das dritte Ladekabel 23 wird ein zweites Elektrofahrzeug 31 von der dritten Ladestation 30 mit elektrischer Energie geladen. Wie aus der Fig. 1 ersichtlich ist, werden an der zweiten Ladestation 20 und der dritten Ladestation 30 Elektrofahrzeuge 21 und 31 geladen, wohingegen an der ersten Ladestation 10 kein Ladevorgang stattfindet. Jede der Elektrofahrzeuge 21 und 31 umfasst eine Batterie (in Fig. 1 nicht gezeigt).

Die erste Ladestation 10 unterscheidet sich von der zweiten Ladestation 20 und der dritten Ladestation 30 in dem die erste Ladestation 10 ferner eine Lastmanagementvorrichtung 40 aufweist. Über Ethernet-Leitungen 60 stehen die erste Ladestationssoftware 15, die Lastmanagementvorrichtung 40, die zweite Ladestationssoftware 25 und die dritte Ladestationssoftware 35 in Kommunikationsverbindung.

Über die Ethernet-Leitungen 60 kann insbesondere eine Modbus/TCP (Transmission Control Protokoll) -Kommunikation durchgeführt werden. Alternativ ist es möglich, dass die Kommunikationsverbindung über einen CAN (Control Area Network) -Bus durchgeführt wird. So kann die Lastmanagementvorrichtung 40 über die Ethernet-Leitungen 60 Ist-Werte von der ersten Ladestationssoftware 15, der zweiten Ladestationssoftware 25 unter der dritten Ladestationssoftware 35 empfangen bzw. Soll-Werte an diese senden. So kann die Lastmanagementvorrichtung 40 von der ersten Ladestationssoftware 15, der zweiten Ladestationssoftware 25 und der dritten Ladestationssoftware 35 Messdaten erhalten, die anzeigen, welche elektrischen Leistungen gerade an die ladenden Elektrofahrzeuge 21, 31 abgegeben werden. Ferner kann die Lastmanagementvorrichtung 40 der ersten Ladestationssoftware 15, der zweiten Ladestationssoftware 25 unter der dritten Ladestationssoftware 35 Soll-Leistungswerte zum Laden der Elektrofahrzeuge 21, 31 vorgeben. Des Weiteren erlangt die Lastmanagementvorrichtung 40 über die Ethernet-Leitungen 60 Information, an welchen der Ladestationen 10, 20 und 30 aktuell Elektrofahrzeuge 21, 31 geladen werden.

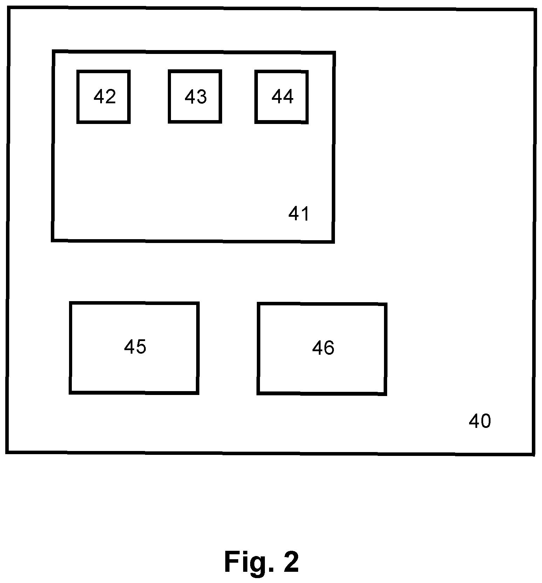

Die Fig. 2 zeigt eine schematische Darstellung eines Ausführungsbeispiels der in der Fig. 1 gezeigten Lastmanagementvorrichtung 40. Die Lastmanagementvorrichtung 40 umfasst eine Recheneinheit 41, ein Speichermedium 45 und eine Kommunikationsvorrichtung 46.

Die Kommunikationsvorrichtung 46 ist dazu eingerichtet, über die Ethernet-Leitungen 60 mit der ersten Ladestationssoftware 15, der zweiten Ladestationssoftware 25 unter der dritten Ladestationssoftware 35 zu kommunizieren. Die empfangenen und gesendeten Daten können in dem Speichermedium 45 gespeichert und von der Recheneinheit 41 verarbeitet werden. Dazu umfasst die Recheneinheit 41 Mittel 42 zum Erlangen einer aktuellen Anzahl von Ladestationen, an denen Elektrofahrzeuge elektrisch geladen werden, Mittel 43 zum Bestimmen, in Abhängigkeit von der Anzahl von Ladestationen 10, 20, 30, einer an dem Netzanschlusspunkt 5 maximal abgebbaren elektrischen Leistung, und Mittel 44 zum Steuern elektrischer Ladeleistungen der Ladestationen, an denen die Elektrofahrzeuge geladen werden, in Abhängigkeit von der an dem Netzanschlusspunkt maximal abgebbaren elektrischen Leistung.

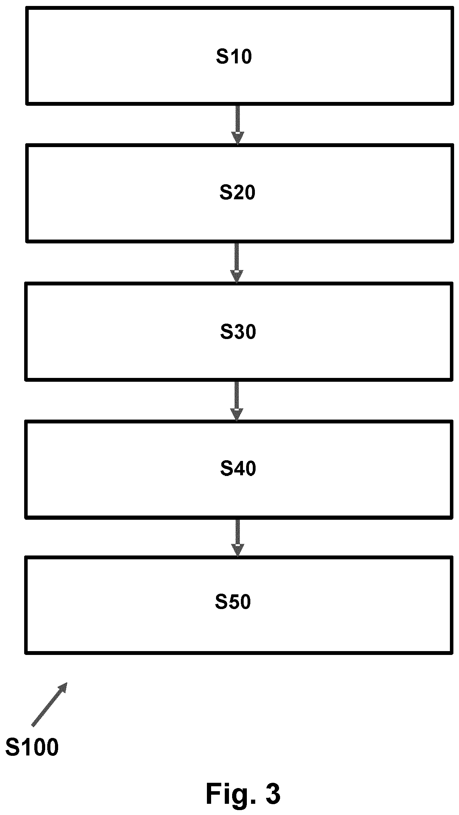

Die Fig. 3 zeigt ein Flussdiagramm eines Ausführungsbeispiels eines Lastmanagementverfahrens S100. Das Lastmanagementverfahren S100 wird von der in den Figs. 1 und 2 gezeigten Lastmanagementvorrichtung 40 ausgeführt.

In einem ersten Verfahrensschritt S10 erlangt die Lastmanagementvorrichtung 40 eine aktuelle Anzahl von Ladestationen, an denen Elektrofahrzeuge elektrisch geladen werden. Dies kann dadurch erfolgen, in dem die Lastmanagementvorrichtung 40 kontinuierlich von den Ladestationen 10, 20, 30 Messwerte hinsichtlich der aktuell abgegebenen elektrischen Leistung erhält. Ist ein Messwert null, so kann darauf geschlossen werden, dass gerade kein Elektrofahrzeug von der jeweiligen Ladestation 10, 20, 30 geladen wird.

In einem zweiten Verfahrensschritt S20 bestimmt die Lastmanagementvorrichtung 40, in Abhängigkeit von der Anzahl von Ladestationen, die in dem ersten Verfahrensschritt S10 bestimmt wurde, eine an dem Netzanschlusspunkt 5 maximal abgebbare elektrische Leistung. Die an dem Netzanschlusspunkt 5 maximal abgebbare elektrische Leistung kann insbesondere aus einer Differenz einer tatsächlich vorhandenen, an dem Netzanschlusspunkt 5 maximal abgebbaren elektrischen Leistung und einem Leistungspufferwert bestimmt werden. Die Höhe des Leistungspufferwerts hängt dabei von der Anzahl von Ladestationen 10, 20, 30, an denen aktuell Elektrofahrzeuge 21, 31 elektrisch geladen werden, ab.

In einem dritten Verfahrensschritt S30 steuert die Lastmanagementvorrichtung die elektrischen Ladeleistungen der Ladestationen 10, 20, 30, an denen die Elektrofahrzeuge 21, 31 geladen werden, in Abhängigkeit von der an dem Netzanschlusspunkt 5 maximal abgebbaren elektrischen Leistung.

Das Steuern S30 der elektrischen Ladeleistungen der Ladestationen 10, 20, 30 kann insbesondere den Verfahrensschritt Vorgeben von Soll-Ladeparametern für die Ladestationen 10, 20, 30, an denen aktuell Elektrofahrzeuge 21, 31 elektrisch geladen werden, umfassen. Ferner kann das Steuern S30 der elektrischen Ladeleistungen der Ladestationen 10, 20, 30 die an dem Netzanschlusspunkt 5 maximal abgebbare elektrische Leistung gleichmäßig auf alle Ladestationen 10, 20, 30, an denen aktuell Elektrofahrzeuge 21, 31 elektrisch geladen werden, verteilen.

Bei den weiteren Verfahrensschritten S40 und S50 handelt es sich um optionale Verfahrensschritte.

In einem vierten Verfahrensschritt S40 bestimmt die Lastmanagementvorrichtung 40 Batterieladezustände der Elektrofahrzeuge 21, 31, die aktuell an den Ladestationen 10, 20, 30 elektrisch geladen werden. Dies kann durch Vergleichen aktueller Leistungsaufnahmewerte der Elektrofahrzeuge 21, 31 mit zeitlich früheren Leistungsaufnahmewerten der Elektrofahrzeuge 21, 31 erfolgen. Alternativ können dazu Messungen durch die Ladestationen 10, 20, 30 ausgeführt werden.

In einem anschließenden fünften Verfahrensschritt S50 bestimmt die Lastmanagementvorrichtung 40, in Abhängigkeit von den Batterieladezuständen der Elektrofahrzeuge 21, 31, die an dem Netzanschlusspunkt 5 maximal abgebbare elektrische Leistung.

Dabei wird berücksichtigt, dass die Leistungsaufnahme eines Elektrofahrzeugs 21, 31 während eines Ladevorgangs abnimmt, wenn die Batterie des Elektrofahrzeugs fast vollständig geladen ist. Dadurch kann die Größe des Leistungspufferwerts in Abhängigkeit von der reduzierten Ladeleistung dynamisch angepasst werden. So berücksichtigt die Lastmanagementvorrichtung 40 für die Bestimmung des dynamischen Leistungspufferwerts, wie viele Elektrofahrzeuge 21, 31 weniger elektrische Leistung von den Ladestationen 20, 30 beziehen, da deren Batterien fast vollständig aufgeladen sind. Folglich kann mehr tatsächlich zur Verfügung stehende Leistung an den aktiven Ladestationen 20, 30 bereitgestellt werden.

Insbesondere kann vorgesehen sein, die an dem Netzanschlusspunkt 5 maximal abgebbare elektrische Leistung zu erhöhen, wenn der Batterieladezustand zumindest eines ladenden Elektrofahrzeugs 80% der Vorladung erreicht. Alternativ kann vorgesehen sein, dass die an dem Netzanschlusspunkt 5 maximal abgebbare elektrische Leistung erhöht wird, wenn der Batterieladezustand zumindest eines ladenden Elektrofahrzeugs 90 % erreicht.

Der zweite Verfahrensschritt S20 kann ferner eine Steuerung dahingehend umfassen, dass sich die Höhe des Leistungspufferwerts erhöht, je mehr Ladestationen 10, 20, 30 aktuell Elektrofahrzeuge 21, 31 elektrisch laden. Zusätzlich kann der zweite Verfahrensschritt S20 eine dahingehende Steuerung umfassen, in dem sich die Höhe des Leistungspufferwerts verringert, je weniger Ladestationen 10, 20, 30 aktuell Elektrofahrzeuge 21, 31 elektrisch laden.

Die Steuerung kann des Weiteren derart ausgebildet sein, dass sich ab einer vorgegebenen aktuellen Anzahl von Ladestationen 10, 20, 30, die Elektrofahrzeuge 21, 31 elektrisch laden, bei einer Erhöhung der aktuellen Anzahl von Ladestationen 10, 20, 30, die Elektrofahrzeuge 21, 31 elektrisch laden, der Leistungspufferwert nicht weiter erhöht.

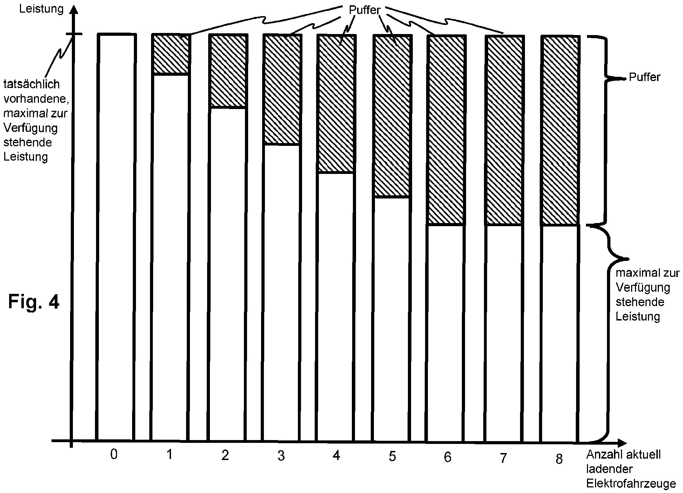

Dieser Aspekt wird in der Fig. 4 veranschaulicht. Das Diagramm der Fig. 4 zeigt in der X-Achse die Anzahl der aktuell ladenden Elektrofahrzeuge und in der Y-Achse die elektrische Leistung. Bei diesem Ausführungsbeispiel wird angenommen, dass an einem Netzanschlusspunkt 5 acht Ladestationen angeschlossen sind. Somit können maximal acht Elektrofahrzeuge gleichzeitig geladen werden. An der Y-Achse ist eine tatsächlich vorhandene, maximal zur Verfügung stehende elektrische Leistung markiert.

Wenn kein Elektrofahrzeug geladen wird, ist die maximal zur Verfügung stehende elektrische Leistung gleich der tatsächlich vorhandenen, maximal zur Verfügung stehenden elektrischen Leistung. Wenn ein Elektrofahrzeug an einer Ladestation geladen wird, so verringert sich die maximal zur Verfügung stehende Leistung um den schraffiert angezeigten Leistungspufferwert. Der Leistungspufferwert erhöht sich und die maximal zur Verfügung stehende elektrische Leistung verringert sich, je mehr Elektrofahrzeuge an den Ladestationen geladen werden.

Wie aus der Fig. 4 ersichtlich ist, erhöhen sich in diesem Ausführungsbeispiel die Leistungspufferwerte jedoch nur bis sechs Elektrofahrzeuge geladen werden, d.h., wenn sieben oder acht Elektrofahrzeuge geladen werden, erhöhen sich die Leistungspufferwerte nicht mehr und entsprechend verringert sich die maximal zur Verfügung stehende elektrische Leistung nicht mehr. Folglich kann mit diesem Leistungssteuerung-Algorithmus die Zurverfügungstellung der maximal zur Verfügung stehenden elektrischen Leistung an den Ladestationen weiter optimiert werden.

Die vorstehend beschriebenen Verfahrensschritte können insbesondere kontinuierlich, in vorbestimmten zeitlichen Abständen ausgeführt werden. Eine Verarbeitung in Echtzeit ist ebenfalls denkbar.

Bezugnehmend auf die Fig. 1 kann ferner für jede elektrische Phase des Netzanschlusspunkts 5 die an dem Netzanschlusspunkt 5 maximal abgebbare elektrische Leistung bestimmt werden. So kann für jede elektrische Phase ein eigener dynamischer Puffer vorgesehen sein, wodurch asymmetrische Belastungen beim Laden der Elektrofahrzeuge 21 und 31 ausgleichen werden können.

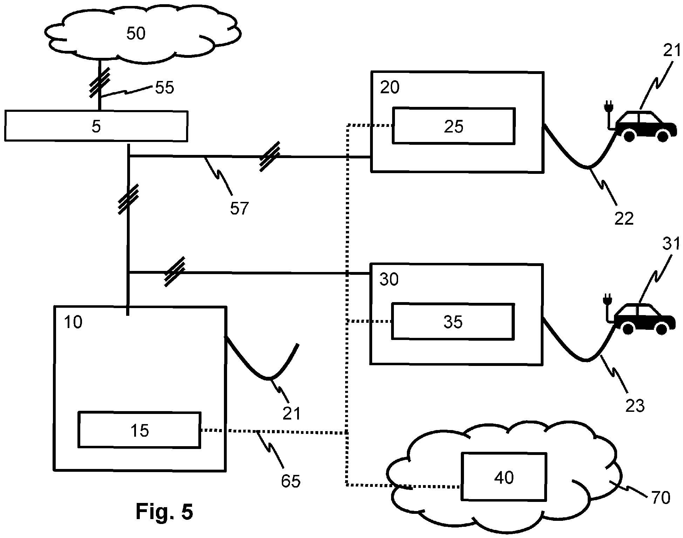

Die Fig. 5 zeigt eine schematische Darstellung eines zweiten Ausführungsbeispiels eines Lastmanagementsystems für eine Vielzahl an einem Netzanschlusspunkt angeschlossene Ladestationen für Elektrofahrzeuge.

Das zweite Ausführungsbeispiel der Fig. 5 unterscheidet sich von dem ersten Ausführungsbeispiel der Fig. 1 in dem die Lastmanagementvorrichtung 40 nicht mehr in der ersten Ladestation 10, sondern in einem Cloud-Server 70 vorgesehen ist.

Entsprechend sind Kommunikationsverbindungen 65 (drahtlos, beispielsweise über ein 4G oder 5G Mobilfunknetz, und/oder drahtgebunden) vorgesehen, welche eine Kommunikation der Lastmanagementvorrichtung 40 mit der ersten Ladestationssoftware 15, der zweiten Ladestationssoftware 25 unter der dritten Ladestationssoftware 35 ermöglichen.

Das in dem Ausführungsbeispiel der Fig. 3 beschriebene Lastmanagementverfahren kann ebenfalls von der in der Fig. 1 gezeigten Lastmanagementvorrichtung 40 ausgeführt werden.

Alternativ kann in einem weiteren Ausführungsbeispiel die Lastmanagementvorrichtung 40 in einer Transformatorstation bei dem Netzanschlusspunkt 5 vorgesehen sein, wobei zusätzliche Kommunikationsleitungen zwischen der Lastmanagementvorrichtung 40 und der der ersten Ladestationssoftware 15, der zweiten Ladestationssoftware 25 unter der dritten Ladestationssoftware 35 vorgesehen sein können.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Lastmanagementverfahren (S100) für an einem Netzanschlusspunkt (5) angeschlossene Ladestationen (10, 20, 30) für Elektrofahrzeuge (21, 31), umfassend
Erlangen (S10) einer aktuellen Anzahl von Ladestationen (10, 20, 30), an denen Elektrofahrzeuge (21, 23) elektrisch geladen werden;
Bestimmen (S20), in Abhängigkeit von der Anzahl von Ladestationen (10, 20, 30), einer an dem Netzanschlusspunkt (5) maximal abgebbaren elektrischen Leistung; und
Steuern (S30) elektrischer Ladeleistungen der Ladestationen (10, 20, 30), an denen die Elektrofahrzeuge (21, 31) geladen werden, in Abhängigkeit von der an dem Netzanschlusspunkt (5) maximal abgebbaren elektrischen Leistung.

2. Lastmanagementverfahren (S100) nach Anspruch 1, wobei
die an dem Netzanschlusspunkt (5) maximal abgebbare elektrische Leistung aus einer Differenz einer tatsächlich vorhandenen, an dem Netzanschlusspunkt (5) maximal abgebbaren elektrischen Leistung und einem Leistungspufferwert bestimmt wird.

3. Lastmanagementverfahren (S100) nach Anspruch 2, wobei
die Höhe des Leistungspufferwerts von der Anzahl von Ladestationen (10, 20, 30), an denen aktuell Elektrofahrzeuge (21, 31) elektrisch geladen werden, abhängt.

4. Lastmanagementverfahren (S100) nach Anspruch 2 oder 3, wobei
sich die Höhe des Leistungspufferwerts erhöht, je mehr Ladestationen (10, 20, 30) aktuell Elektrofahrzeuge (21, 31) elektrisch laden; und/oder
sich die Höhe des Leistungspufferwerts verringert, je weniger Ladestationen (10, 20, 30) aktuell Elektrofahrzeuge (21, 31) elektrisch laden.

5. Lastmanagementverfahren (S100) nach einem der Ansprüche 2 bis 4, wobei
sich ab einer vorgegebenen aktuellen Anzahl von Ladestationen (10, 20, 30), die Elektrofahrzeuge (21, 31) elektrisch laden, bei einer Erhöhung der aktuellen Anzahl von Ladestationen (10, 20, 30), an denen Elektrofahrzeuge (21, 31) elektrisch geladen werden, der Leistungspufferwert nicht erhöht.

6. Lastmanagementverfahren (S100) nach einem der vorhergehenden Ansprüche, wobei
für jede elektrische Phase des Netzanschlusspunkts (5) die an dem Netzanschlusspunkt (5) maximal abgebbare elektrische Leistung bestimmt wird.

7. Lastmanagementverfahren (S100) nach einem der vorhergehenden Ansprüche, ferner umfassend
Bestimmen (S40) von Batterieladezuständen der Elektrofahrzeuge (21, 31), die aktuell an den Ladestationen (10, 20, 30) elektrisch geladen werden; und
Bestimmen (S50), in Abhängigkeit von den Batterieladezuständen der Elektrofahrzeuge (21, 31), der an dem Netzanschlusspunkt (5) maximal abgebbaren elektrischen Leistung.

8. Lastmanagementverfahren (S100) nach Anspruch 7, wobei das Bestimmen (S40) der Batterieladezustände umfasst:
Vergleichen aktueller Leistungsaufnahmewerte der Elektrofahrzeuge (21, 31) mit zeitlich früheren Leistungsaufnahmewerten der Elektrofahrzeuge (21, 31).

9. Lastmanagementverfahren (S100) nach Anspruch 7 oder 8, wobei
die an dem Netzanschlusspunkt (5) maximal abgebbare elektrische Leistung erhöht wird, wenn der Batterieladezustand zumindest eines ladenden Elektrofahrzeugs (21, 31) 80%, insbesondere 90%, erreicht.

10. Lastmanagementverfahren (S100) nach einem der vorhergehenden Ansprüche, wobei
das Bestimmen (S10) der aktuellen Anzahl von Ladestationen (10, 20, 30), an denen Elektrofahrzeuge (21, 23) elektrisch geladen werden,
das Bestimmen (S20) der an dem Netzanschlusspunkt (5) maximal abgebbaren elektrischen Leistung, und/oder
das Steuern (S30) der elektrischen Ladeleistungen der Ladestationen (10, 20, 30)
kontinuierlich in vorbestimmten zeitlichen Abständen erfolgt.

11. Lastmanagementverfahren (S100) nach einem der vorhergehenden Ansprüche, wobei
das Steuern (S30) der elektrischen Ladeleistungen der Ladestationen (10, 20, 30) die an dem Netzanschlusspunkt (5) maximal abgebbare elektrische Leistung gleichmäßig auf alle Ladestationen (10, 20, 30), an denen aktuell Elektrofahrzeuge (21, 31) elektrisch geladen werden, verteilt; und/oder wobei
das Steuern (S30) der elektrischen Ladeleistungen der Ladestationen (10, 20, 30) Vorgeben von Soll-Ladeparametern für die Ladestationen (10, 20, 30), an denen aktuell Elektrofahrzeuge (21, 31) elektrisch geladen werden, umfasst.

12. Computerprogrammprodukt, umfassend Befehle, die bei der Ausführung des Programms durch einen Computer (41) diesen veranlassen, das Lastmanagementverfahren (S100) nach einem der vorhergehenden Ansprüche auszuführen.

13. Computerlesbares Speichermedium (45), umfassend Befehle, die bei der Ausführung durch einen Computer (41) diesen veranlassen, das Lastmanagementverfahren (S100) nach einem der Ansprüche 1 bis 11 auszuführen.

14. Lastmanagementvorrichtung (40) für an einem Netzanschlusspunkt (5) angeschlossene Ladestationen (10, 20, 30) für Elektrofahrzeuge (21, 31), umfassend:
Mittel (42) zum Erlangen einer aktuellen Anzahl von Ladestationen (10, 20, 30), an denen Elektrofahrzeuge (21, 31) elektrisch geladen werden;
Mittel (43) zum Bestimmen, in Abhängigkeit von der Anzahl von Ladestationen (10, 20, 30), einer an dem Netzanschlusspunkt (5) maximal abgebbaren elektrischen Leistung; und
Mittel (44) zum Steuern elektrischer Ladeleistungen der Ladestationen (10, 20, 30), an denen die Elektrofahrzeuge (21, 31) geladen werden, in Abhängigkeit von der an dem Netzanschlusspunkt (5) maximal abgebbaren elektrischen Leistung.

15. Ladestation (10) für Elektrofahrzeuge (21, 31), umfassend
die Lastmanagementvorrichtung (40) nach Anspruch 14;
eine Kommunikationsvorrichtung (46), die dazu eingerichtet ist, mit den weiteren an dem Netzanschlusspunkt (5) angeschlossenen Ladestationen (20, 30) für Elektrofahrzeuge (21, 31) zu kommunizieren.
